# EUROPEAN PATENT APPLICATION

(11) **EP 2 498 517 A1**
(43) Date of publication of application: **12.09.2012**
(21) Application number: 10803941.3
(22) Date of filing: 07.07.2010
(51) Int. Cl.: H04W 4/02, H04W 4/06, H04W 16/14

(54) **METHOD FOR DISTRIBUTING WIRELESS AUDIO AND VIDEO SIGNALS INDOORS**

(30) Priority: 31.07.2009 ES 200930549
(71) Applicant: Telefónica, S.A., 28013 Madrid (ES)
(72) Inventor: CUCALA GARCÍA, Luis, E-28013 Madrid (ES); WARZANSKYJ GARCÍA, Wsewolod, E-28013 Madrid (ES); ALONSO GRACIA, Valentín, E-28013 Madrid (ES); OLMOS GONZÁLEZ, Pedro, E-28013 Madrid (ES)
(74) Representative: Carpintero Lopez, Francisco
(86) International application number: PCT/ES2010/070469
(87) International publication number: WO 2011/012750

(57) **Abstract**

The method for distributing wireless audio and video signals indoors comprises receiving broadband signals in a radio access node (101) which transmits and receives wireless signals to and from at least one client device (110); the method is characterized in that the radio access node (101) processes the received signals and generates a new modified DVB-T type signal in the 5 GHz band, so that the spectral power density of the modified DVB-T type signal is at least 4 dB greater than the IEEE 802.11 n signal which uses the same frequency band. This allows reliably sending interference-resistant audio and video signals, ensuring coverage, monitoring and remote configuration of the system used and ensuring quality of service.

## Description

### Object of the Invention

The present invention relates to a method the object of which is to allow sending audio and video signals in a system for distributing radio signals indoors, such that said audio and video signals are interference-resistant, ensuring the coverage, monitoring and remote configuration of the system used and ensuring the quality of service. It is based on the novel use of a Digital Video Broadcasting-Terrestrial (DVB-T) type radio interface in the 5 GHz band.

The present invention applies to the field of telecommunications and, more specifically, to the construction and deployment of the wireless communications networks inside buildings and their connection with other telecommunications networks.

### Background of the Invention

The technique conventionally used to provide radio communications interfaces inside buildings consists of installing as many devices as interfaces are needed. These devices must be configured by the user himself/herself and cannot be upgraded to changes made in the communications standard used. Furthermore, these devices do not ensure coverage in just any room and cannot be monitored and remotely controlled from the operator network, such that they require the local configuration thereof by the user.

Some examples of devices with the aforementioned drawbacks are:
- A device which allows access to the telecommunications network by means of the copper pair and the ADSL interface, and which supports in the home an IEEE 802.11x type wireless network (WiFi, Wireless Fidelity), which wireless network must be configured by the user himself/herself and cannot be monitored by the telecommunications operator.
- An internet protocol IP television (IPTV) decoder (also known as set-top-box) which provides DVB-IP type signals to a television set and is connected by means of cable to an ADSL router allowing it to communicate with the telecommunications network.
- A system for distributing wireless signals in the home based on IEEE 802.11 x (WiFi) routers which must be configured locally by the user himself/herself and cannot be monitored remotely from the telecommunications operator network.

With the current technology, these devices and these deployment techniques have the following limitations:
- It is not possible to ensure radio coverage in all the rooms.
- It is necessary for the user to manually configure the devices.
- It is not possible to ensure the remote monitoring of all the devices from the telecommunications operator network.
- It is not possible to ensure the quality of service provided.
- There have to be at least as many devices as there are communications interfaces to be provided, with the subsequent accumulation of devices and cost increase.
- The devices are specific for each radio standard and cannot be upgraded, such that in the event of improvement in the standard or new standards, the devices must be disposed of and new ones must be purchased.
- In some cases, providing the service requires using a wired connection.

On the other hand, in other areas of wireless communications, such as mobile communications based on GSM/GPRS/UMTS, a control channel included in the same radio interface is used to perform certain control and monitoring operations. Since the spectrum is limited, there is no dedicated air interface, but a control channel included in the same radio interface being controlled or supervised is used. The collection of maintenance data relating, for example, to the quality of the radio links (location, received signal level, error transmission rate, etc.) is regulated by specific protocols within specific GSM/GPRS/UMTS standards, etc. For example, European patent application EP1619911 describes a method of obtaining and transmitting maintenance information in mobile communications networks in which, once said information is locally collected in a mobile terminal, this information is transmitted to a remote server which is responsible for processing, analyzing and, if necessary, correcting it in relation to any transmission parameter depending on the processed data.

However, this exchange of control information between a mobile terminal and a remote server is performed through a logic control channel included in the same radio interface. This means that if said radio link crashes for any reason (lack of coverage, overload, etc.), the exchange of monitoring information is also interrupted.

All the aspects described in this background section have been contemplated in Spanish patent application number P200802049 on which the present invention is based, but said document does not contemplate distributing interference-resistant audio and video signals indoors.

Specifically, the present invention solves the specific problem of the wireless sending of audio and video signals of any type in an indoor setting and subjected to radio interference, whether in a home or in a public building. In this use setting, the use of a radio interface is fundamental because most clients do not allow new wiring installations in their home or office.

Given this problem, there is no technical solution which allows sending several audiovisual, particularly of high definition television contents, wirelessly, being interference-resistant and allowing the complete coverage of a typical office or home from a single emitting point.

All the solutions in the state of the art using the 2.4 GHz open band have a limited bandwidth and suffer from serious quality problems due to the high occupancy of the available frequencies. In the case of conventional solutions working in the 5 GHz open band, such as WiFi 802.11n for example, they inefficiently use the radio spectrum in the case of sending audiovisual signals and are susceptible to suffering interference problems in the future as the use of this band becomes more widespread.

On the other hand, the use of the licensed spectrum is very expensive and in most cases it is set aside for specific uses other than sending audio and video indoors.

### Description of the Invention

All the features of Spanish patent application number P200802049 apply to the present invention, in which indoor broadband signals are also received in a radio access node locally or through a telecommunications access network to which it is connected by means of an access interface, where said radio access node comprises a broadband signal transmitting/receiving module configured to transmit and receive broadband wireless signals through a broadband radio interface to and from at least one client device comprising a broadband signal transmitting/receiving module configured to transmit and receive broadband wireless signals to/from said radio access node through said broadband radio interface.

The invention also comprises sending control signals over a control channel configured to exchange control signals between said radio access node and said at least one client device over a radio control interface, said radio access node and the client device comprising a control signal transmitting/receiving module configured to establish said control channel to transmit and receive wireless signals over said radio control interface.

The control channel is configured so that a telecommunications operator can communicate with any of the devices of the system and with any end device connected to those devices of the system through an access interface connected to a telecommunications access network termination to perform remote of configuration, operation, maintenance, monitoring and management tasks of said devices, regardless of the state of the corresponding broadband radio interfaces. More specifically, at least one of those radio access nodes, client devices, radio router devices and sensing or actuating devices external to said system, is configured to implement upgradeable radio functionalities by means of software in a distributed manner, being capable of upgrading individually their functionalities by means of changes in their software which allow supporting new standards or variations thereof, and said control channel is configured to support said software loading to upgrade the devices.

Additionally, sending broadband signals and control signals between the radio access node and the client device is done through at least one radio routing device comprising a broadband signal transmitting/receiving module configured to transmit/receive broadband wireless signals and a control signal transmitting/receiving module configured to transmit and receive wireless signals to/from a radio control interface, such that the router regenerates said broadband and radio control signals and retransmits them between the radio access node and the client device.

Furthermore, in the preferred embodiment of the invention the client device is connected to an end device through an end device interface, said client device being configured to provide the end device with at least one communications service through the end device interface. Alternatively, at least one client device comprises a module configured to perform end device functions, where that client device is configured to provide the module at least one communications service through an end device internal interface.

The invention can also include one or more radio access nodes, client devices and/or radio router devices, which can include a base unit and a plurality of insertable modules inserted in the base unit.

The invention relates to a method the main novelty of which consists of comprising the following steps:
- receiving multiple audio and video signals in the radio access node according to any of the Digital Video Broadcasting, DVB, standard variants, selected from Digital Video Broadcasting-Terrestrial, DVB-T, Digital Video Broadcasting-Satellite, DVB-S, Digital Video Broadcasting-Internet Protocol, DVB-IP, Digital Video Broadcasting-Cable, DVB-C, and Digital Video Broadcasting-Handheld, DVB-H;
- receiving multiple audio and video signals in the radio access node according to any of the Moving Picture Expert Group, MPEG, format variants;
- processing said received audio and video signals in the radio access node and generating a new modified DVB-T type signal for transmission in the band comprised between 5470-5725 MHz, so that the spectral power density of the modified DVB-T type signal is at least 4 dB greater than the IEEE 802.11n signal which uses the same 5470-5725 MHz frequency band;
- applying the scanning functionality of the IEEE 802.11n radio spectrum which selects a radio channel other than the one used by the DVB-T broadband radio interface in 5470-5725 MHz due to the higher spectral power density of the latter, so that the interference level of the broadband radio interface in the same radio channel is reduced.

Therefore, based on these audio and video signals, the radio access node forms a multiplexed DVB-T type signal that is emitted in the open band ranging from 5470 to 5725 MHz, instead of in the standard VHF or UHF bands. Accordingly, the novelty of the invention is based on using this frequency band, which is not contemplated in the DVB standard. The advantages of using this type of DVB-T interface in the 5470 to 5725 MHz band with respect to other radio interfaces already available for this frequency band, and how this combination not disclosed until now of the DVB-T standard and 5470 to 5725 MHz open frequency band allows reliably sending audio and video signals in an interfered setting will be described throughout the present document.

Once the audio and video signals are emitted by means of a DVB-T type interface in the 5470 to 5725 MHz band, and if they are re-emitted by the radio rerouting device if this is necessary to ensure coverage in the entire desired room, one or several client devices capture the DVB-T signal in the 5470 to 5725 MHz band and extract the audio and video signals in any of the MPEG format variants (for example, MPEG-2, MPEG-4). The client device could deliver these signals to the end device through the end device interface (typically, though not necessarily, the end device will be a television set). The audio and video signals delivered through the end device interface could be TS-ASI (Transport Stream-Asynchronous Serial Interface), TS-SSI (Transport Stream-Synchronous Serial Interface), TS-SPI (Transport Stream-Synchronous Parallel Interface), PS (Program Stream), DVB-T (in the standard VHF or UHF band), DVB-S, DVB-IP, DVB-C or DVB-H type signals, or any commercial standard used in television sets used to receive the audio and video signal, such as the Euroconnector (also known as SCART, the abbreviated form of "Syndicat des Constructeurs d'Appareils Radiorécepteurs et Téléviseurs", which follows the CENELEC EN 50049-1:1997 standard) or HDMI (High-Definition Multimedia Interface).

The generation of the new modified DVB-T type signal in the radio access node in the frequency band between 5470 and 5725 MHz is done such that some of the data sub-carriers of the modified DVB-T signal always overlap with the pilot sub-carriers of the IEEE 802.11n signal, such that it becomes difficult for radio receivers using the IEEE 802.11n standard to receive pilot sub-carriers and said IEEE 802.11n radio receivers selecting a radio channel other than the one used by the DVB-T type broadband radio interface in the frequency band between 5470 and 5725 MHz is thus facilitated, as established in said IEEE 802.11 n standard.

On the other hand, the generation of the modified DVB-T type signal also allows overlap of the data sub-carriers of the IEEE 802.11 n signal with the pilot sub-carriers of the modified DVB-T signal to occur in less than 0.077% of all cases so that the IEEE 802.11 n signals interfere with the modified DVB-T broadband radio interface to a lesser extent.

The method of the invention further comprises the following steps:
- scanning the multiple audio and video signals received in the radio access node through the access interface,
- recording the different multiple audio and video signal programs in the radio access node, program being understood as a fixed association of audio and video signals;
- sending a list of the different recorded programs to the client device over the radio control interface channel and recording said list in the client device,
- selecting one of the recorded programs through the user control interface connected to the client device,
- sending the selection made to the radio access node through the control interface,
- sending the content of the recorded program together with other programs from the radio access node to the client device through the broadband interface, and sending the position of the selected program to the client device through the control interface,
- receiving the recorded program together with other programs in the client device and receiving the position of the selected program in the client device to extract the selected program from the position of the received selected program,
- reproducing the selected audio and video signal in the end device connected to the client device through the end device interface.

Therefore, the control channel is further used to allow being able to select from the client device the audio and video signals that will be sent by the broadband radio interface from the radio access node to the end device.

The radio control interface also uses the 5470-5725 MHz band, so the radio control interface and the broadband radio interface use a coordinated frequency in which the radio control interface performs a step of selecting a frequency from the following:
- the frequency of the radio control interface is made to coincide with the sub-carrier 0 of the IEEE 802.11 n standard, which is a frequency in which the IEEE 802.11 n standard does not conventionally emit a radio signal to facilitate the homodyne detection in the IEEE 802.11 n receivers, such that interference over the radio control interface is prevented and changing the IEEE 802.11 n radio channel is facilitated because the IEEE 802.11 n standard establishes that when a sub-carrier is detected at a frequency where it must be unoccupied, it changes the channel.
- the frequency of the radio control interface is made to coincide with pilot sub-carrier 21 of the IEEE 802.11 n standard, such that it becomes difficult to detect pilot sub-carrier 21 and accordingly changing the IEEE 802.11n channel is facilitated,
- the frequency of the radio control interface is made to coincide with sub-carriers 27 to 32 of the IEEE 802.11 n standard, which are conventionally not used, therefore preventing interference over the radio control interface.

If at least one routing device is used, sending broadband signals and control signals between the radio access node and the client device is performed through at least said routing device which is configured to receive radio frequency signals through a broadband radio interface and a radio control interface, both in the 5470-5725 MHz band, to regenerate said broadband and radio control signals and to retransmit them between the radio access node and the client device and vice versa.

One or more of the different described devices, i.e., radio access node, client device, routing device, can perform cognitive radio functions analyzing the spectrum occupancy in the 5470 to 5725 MHz band, such that it selects the least interfered-with area of the spectrum in 8 MHz-wide blocks, such that the radio receiver supporting the broadband radio interface tunes in to the frequency, at least two of its receiving sub-carriers coinciding exactly with two pilot sub-carriers of the IEEE 802.11 n standard to detect the presence of said pilot sub-carriers and to determine that a specific radio channel is occupied by an IEEE 802.11 n signal.

Receiving DVB signals in the radio access node is performed by means of a decoder after which the DVB-T encoding is performed to obtain the modified DVB-T signal in the 5470-5725 MHz band, whereas the MPEG baseband signals which are received in the radio access node are applied directly to the DVB encoder to obtain the modified DVB-T signal in the 5470-5725 MHz band.

Receiving modified DVB-T broadband signals in the client device is performed by means of a tuner, after which is performed a DVB-T decoding to send them to the end device through the end device interface.

The described method of the invention has the following advantages:
* It has a higher spectral power density than the WiFi 802.11-based solution, such that under identical propagation conditions, the DVB-T signal in the proposed 5 GHz band will have a better signal to interference ratio.
* It allows selecting the position of its pilot channels, which are the most important for correct radio transmission, such that they are minimally interfered with by WiFi 802.11.
* It allows selecting the position of some of its data sub-carriers such that they always coincide with the pilot sub-carriers of WiFi 802.11, thereby facilitating WiFi 802.11 to occupy another spectral area.
* It allows performing cognitive radio functions to determine whether the radio channel is occupied by another WiFi 802.11 radio interface, without needing to add or modify the hardware that is strictly necessary to implement the proposed DVB-T radio interface in 5 GHz.

In summary, the radio access node and the radio router devices are provided to support sending audiovisual signals by means of a radio interface to one or several client devices, whereas each client device delivers the audio and video signal to one or several end devices, which will typically be television sets.

For the purpose of helping to better understand the features of the invention according to a preferred practical embodiment thereof and to complement the description being made, a set of drawings, attached as an integral part thereof, will be described below in an illustrative and non-limiting manner.

### Brief Description of the Drawings

Figure 1 shows a diagram of the system for distributing signals according to application P20082049.
Figure 2 shows a diagram of the radio access node of the preceding figure.
Figure 3 shows a diagram of the client device of Figure 1.
Figures 4, 5 and 6 show examples of assigning frequencies for the broadband radio interface and the radio control interface with respect to an IEEE 802.11n type channel which could coincide in the same frequency band according to the method of the invention.
Figure 7 shows the diagram of the system for distributing audio and video signals of Figure 1 according to an embodiment of the present invention, where the broadband radio interface consists of a DVB-T signal in the 5470 to 5725 MHz band, and where the control channel is used for transmitting information about the selected signals from the client device to the radio access node.
Figure 8 shows the particular embodiment of the radio access node characteristic of this invention, where the broadband radio interface consists of a DVB-T signal in the 5470 to 5725 MHz band of the preceding figure.
Figure 9 shows the particular embodiment of the client device characteristic of this invention, where the broadband radio interface consists of a DVB-T signal in the 5470 to 5725 MHz band of Figure 7.

### Detailed Description of the Invention

The system for distributing broadband wireless signals 100 according to application P20082049 is first described to enable comprehending the invention.

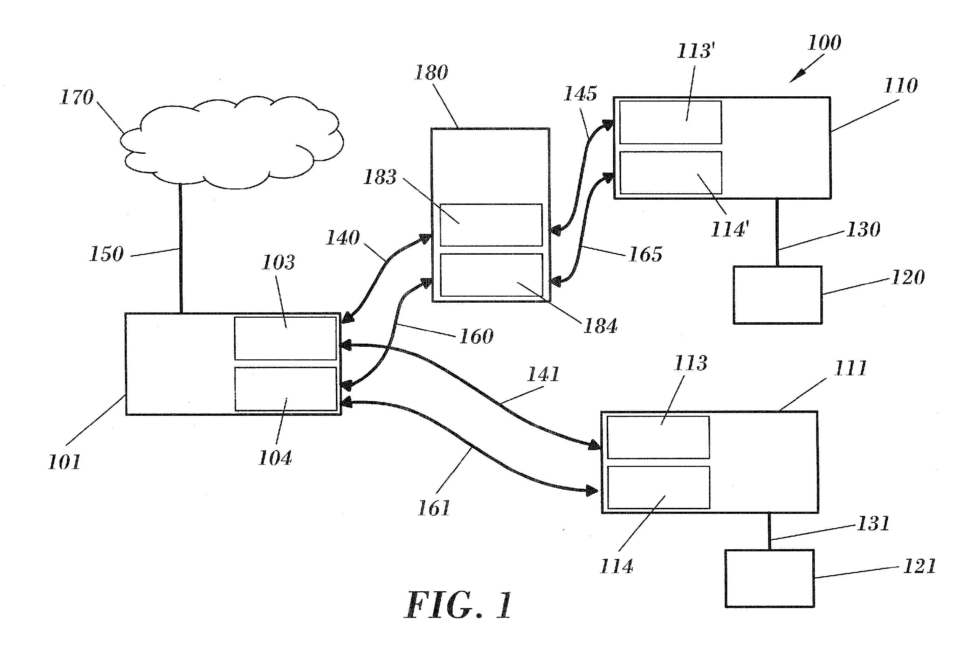

Figure 1 illustrates a diagram of a possible embodiment of the system for distributing broadband wireless signals 1 according to application 20082049 and detailed in the present invention for transmitting audio and video signals inside buildings by means of a DVB-T type radio interface in the 5470 to 5725 MHz open band, in a high interference radio setting. The system 100 comprises the following elements:

A radio access node 101. The rerouting functions between the radio interfaces inside a building and the gateway functions between the wireless network inside the building and an access network 170 (generally a fixed network, for example copper pair or optical fiber to the home), in addition to the management functions for the wireless network in the building, are hosted in this radio access node 101. The radio access node 101 comprises a broadband radio transmitting/receiving module 103 which is described in detail in the present invention to support a DVB-T type radio interface in the 5470 to 5725 MHz open band, and a control radio transmitting/receiving module 104.

The system 100 also comprises one or several client devices 110. Each client device 110 comprises a broadband radio transmitting/receiving module 113 which again is described in detail in the present invention to support a DVB-T type radio interface in the 5470 to 5725 MHz open band, and a control radio transmitting/receiving module 114.

The client devices 110 are designed to provide an end device 120, which by way of example could be a television set, with an end device interface 130, which by way of example could be an HDMI type interface, so that this end device 120 can support the provision of a specific service, which in the present invention will be an audiovisual television service.

Optionally, if necessary to ensure the radio coverage, the system 100 also comprises one or several radio router devices 180 which are used to extend the radio coverage provided by a radio access node 101. These radio router devices 180 are capable of capturing the radio signals, regenerating them and re-emitting them in the most appropriate frequency band. To that end, each radio routing device 180 comprises a broadband radio transmitting/receiving module 183, which is described in detail in the present invention to support a DVB-T type radio interface in the 5470 to 5725 MHz open band, and a control radio transmitting/receiving module 184. The radio router devices 180 are described below.

The radio access node 101 communicates with the client devices 110 and, optionally, with the radio router device or devices 180 by means of one or several broadband radio interfaces 140, described in detail in the present invention to support a DVB-T type radio interface in the 5470 to 5725 MHz open band.

These broadband radio interfaces 140 are used for distributing audio and video signals and their associated services throughout the inside of the building.

On the other hand, the radio access node 101 communicates with the telecommunications network operator 170 by means of an access interface 150, which can be supported by wired or wireless means, such as twisted pair cable, optical fiber cable or radio connection. This radio access node 101 is placed in the location inside the building where the telecommunications access network termination 170 is available, for example the point where the copper pair or the optical fiber is available.

The system 100 has a specific radio interface dedicated to the monitoring and configuration of all the devices of the system and it is described in detail in the present invention to support selecting audio and video signals from the client devices. This specific interface is designed such that it has a larger coverage radius and is more interference and transmission error-resistant than any of the other interfaces used in the system.

This specific radio interface, called radio control interface 160, allows implementing a specific communications channel independent of the broadband radio interface. This specific communications channel is called control channel and is used for the control, configuration and monitoring of all the devices installed in the building, and in this invention preferably to allow being able to select from the client device the audio and video contents that will be sent by the radio access node wirelessly by means of the broadband radio interface, as will be described below.

As a result of the existence of the control channel and the fact that the radio access node 101 is connected to the access interface 150, the telecommunications operator can remotely control and monitor the working of the wireless network in the client installations supported by the client devices or intermediate devices 110 and the radio routing devices 180, regardless of the state of the broadband radio interfaces 140 used to support the services.

The radio access node 101 performs the following functions: transmission and reception functions (Tx/Rx) associated with the broadband radio interfaces 140, such as detection and regeneration functions for detecting and regenerating radio signals from the broadband radio interface 140 and signal transmission functions for transmitting signals to the broadband radio interface 140, using at all times the frequency band and the most appropriate standard; transmission and reception functions (Tx/Rx) associated with a radio control interface 160 described in detail below; signal routing functions between the different broadband radio interfaces 140 available in the device; gateway functions between the access interface 150 with the operator network (access network 170) and the different broadband radio interfaces 140 available in the device; cognitive radio functions by means of measuring the occupancy of different bands of the spectrum; configuration functions for configuring the devices making up the system 100, supported by a control channel described below; and identification functions whereby the radio access node 101 informs the telecommunications operator, through the access network 170, about its features, devices of the system that are connected to it, radio technologies and the frequency bands used and the spectrum occupancy.

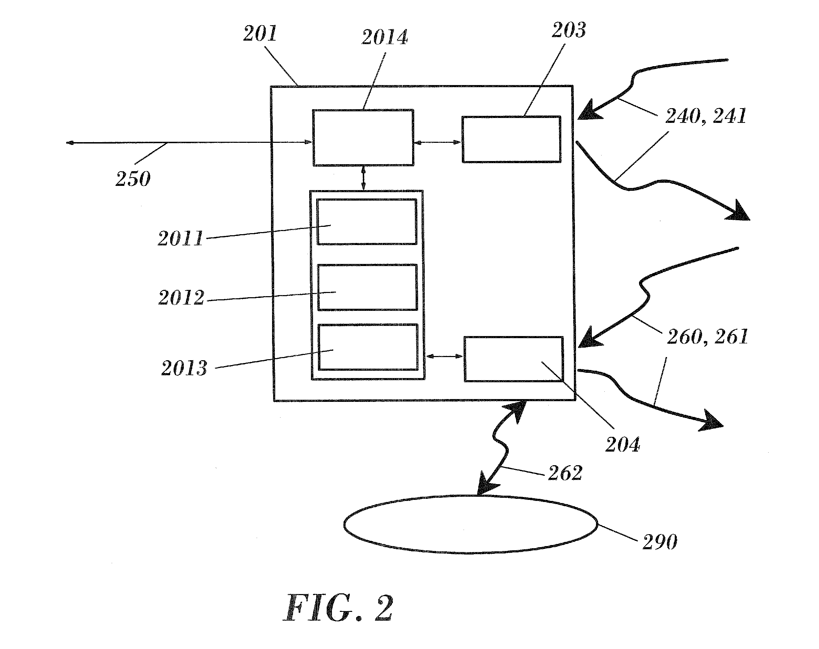

Figure 2 illustrates a possible implementation of the radio access node 101 comprising: a configuration block 2011 responsible for configuring the functionality of the radio access node 101, such as for example its IP address, the devices of the system which can be connected to it or the services which can be provided; an identification block 2012 responsible for storing information which allows identifying all the devices making up the system; and a cognitive radio block 2013, responsible for analyzing the electromagnetic spectrum and determining its occupancy by means of measuring the radio power detected in each band. These modules are accessed through a gateway 2014 with the network access and routing 170. Figure 2 shows also the broadband radio transmitting/receiving modules 103 providing access to a broadband radio interface 140 and the control radio transmitting/receiving modules 104 providing access to a radio control interface 160. The radio access node can be based on a base unit (not depicted) where the characteristic functions associated with the device and several insertable radio modules, which are inserted in the base unit and implement the radio interfaces needed to communicate the radio access node 101 with the remaining devices making up the system, are performed.

Going back to Figure 1, each client device 110 can incorporate some or all of the functionalities of the end device 120 connected thereto, integrating both in a single device. A non-limiting example of this integration can be a television set (end device 120) integrating all the characteristic functions of the client device described in this document.

The client devices 110 communicate with the radio access node 101 by means of one or several broadband radio interfaces 140 and this is described in detail in the present invention for the case of a DVB-T type radio interface in the 5470 to 5725 MHz open band.

The client device 110 performs the following functions:
- transmission and reception functions (Tx/Rx) associated with the broadband radio interfaces 140, such as:
- detection and regeneration functions for detecting and regenerating radio signals from the broadband radio interface and delivering them once processed to the end device 120 through the end device interface 130;
- transmission functions for transmitting signals from the end device 130 to the broadband radio interface and received through the end device interface 130, using to that end the most appropriate frequency band depending on the occupancy of the radio spectrum and on the bandwidth needed;
- transmission and reception functions (Tx/Rx) associated with a radio control interface 160;
- communication functions for communicating with the end device 120 through the end device interface 130;
- the client device 110 can possibly perform specific functions of an end device 120. By way of example, the client device 110 can encompass DVB-T type or DVB-IP digital television signal decoding functions, delivering the already decoded signals to the television set (end device 120) through the end device interface 130; optionally the client device 110 can even perform all the specific functions of an end device, integrating both in a single device;
- cognitive radio functions by means of measuring the occupancy of different bands of the spectrum;
- configuration functions for configuring the device supported by a control channel detailed below;
- identification functions, whereby the client device informs the radio access node 101 or the radio routing device 180 about its features, end devices 120 that are connected to it, radio technologies and frequency bands used, and spectrum occupancy.

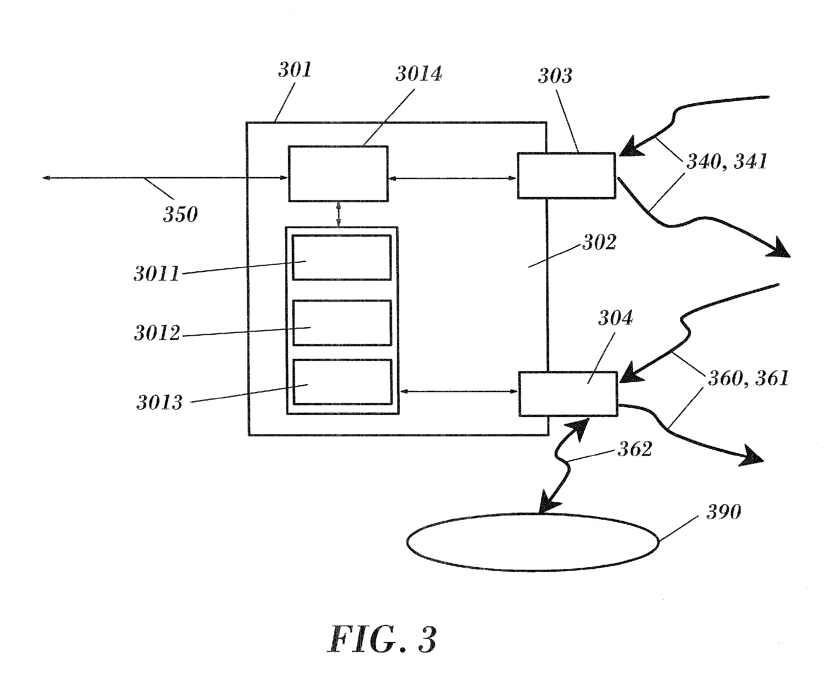

Figure 3 illustrates an implementation of the client device 110 comprising: a configuration block 3101 responsible for configuring the functionality of the client device 110, such as for example its IP address, the devices of the system which can be connected to it or the services which can be provided; an identification block 3102 responsible for storing information which allows the device to identify itself and the end devices 120 which are connected to it; and a cognitive radio block 3103 responsible for analyzing the electromagnetic spectrum and determining its occupancy, by means of measuring the radio power detected in each band. These modules are accessed through a module 3104 which has the function of providing an interface 130 with the end device 120 and, optionally, end device functions. Figure 3 also shows the broadband radio transmitting/receiving modules 113 providing access to a broadband radio interface 140 and the control radio transmitting/receiving modules 114 providing access to a radio control interface 160. The client device can be based on a base unit (not depicted) where the characteristic functions associated with the device and several insertable radio modules, which are inserted in the base unit and implement the radio interfaces needed (broadband radio interfaces 140 and radio control interfaces 160) to communicate the client device with the radio access node 101 or with a radio routing device 180, are performed.

The client device can also be based on a base unit, comprising several insertable radio modules (broadband radio transmitting/receiving module 113 which provides access to a broadband radio interface 140 and control radio transmitting/receiving module 114 which provides access to a radio control interface 160) as well as the remaining described modules.

The radio routing device 180 which is used to extend the coverage radius provided by a radio access node 101 has a configuration equivalent to that of the client device, also described in detail for the case of a DVB-T type radio interface in the 5470 to 5725 MHz open band, from the radio access node 101 and/or other radio routing devices 180. The radio routing device 180 takes the signals received from the broadband radio interfaces 140, reconditions and re-emits them using the most appropriate frequency band, depending on the degree of usage and interference of the radio spectrum.

The radio routing device 180 performs the following functions:
- reception and transmission functions (Tx/Rx) associated with the broadband radio interfaces 140;
- detection and regeneration functions for detecting and regenerating radio signals from the broadband radio interface 140;
- retransmission functions for retransmitting the radio signals, once regenerated, from the detected broadband radio interface to the broadband radio interface 140 using to that end the frequency band and the most appropriate radio technology depending on the occupancy of the radio spectrum and the bandwidth needed.
- transmission and reception functions (Tx/Rx) associated with the control radio interfaces 160;
- routing functions such that a radio signal received by a broadband radio interface 140 can be retransmitted again to another broadband radio interface 140 using a new frequency band;
- cognitive radio functions by means of measuring the occupancy of different bands of the spectrum;
- configuration functions for configuring the device, supported by a control channel detailed below;
- identification functions, whereby the radio routing device 180 informs the radio access node 101 about its features, devices of the system that are connected to it, radio technologies and frequency bands used and spectrum occupancy.

The radio routing device 180 communicates with the radio access point or node 101 and with the client devices or intermediates 110 by means of one or several broadband radio interfaces, which is described in detail in the present invention for the case of a DVB-T type radio interface in the 5470 to 5725 MHz open band.

As described, both the radio access node 101 and the client devices 110 or radio routing devices 180 can incorporate preferably small insertable modules implementing radio interfaces such that they are easily upgradeable in a modular manner.

Furthermore, both the radio access node 101 and the client devices 110 or radio routing devices 180 can be upgraded by means of upgrading the software hosted in any of the modules forming it, such that they can work with new versions of a radio communications interface or with new standards. In other words, the devices implement Software Defined Radio (SDR). This Software Defined Radio concept is further enhanced in a distributed manner, where each of the insertable modules or the base units have the capacity to upgrade their functionalities by means of changing their software which allows providing support for new standards or variations thereof.

Up until now the system for distributing broadband wireless signals 100 according to application 20082049 has been described.

In the present invention, the broadband radio interface implemented by all the elements making up the system consists of a modified DVB-T type signal based on ETSI EN 300 744 standard, such that the area of the spectrum used for radio transmission is the 5 GHz open use band, and specifically the area of the spectrum ranging from 5.470 GHz to 5.725 GHz, instead of the VHF-UHF spectrum described in the ETSI EN 300 744 standard, section "4.8.3 Centre frequency of RF signal (for 8 MHz UHF channels)".

According to the National Frequency Allocation Table, this area of the spectrum from 5.470 GHz to 5.725 GHz is an open use area and is dedicated to the wireless access to electronic communications networks, as well as for high performance local area networks in the 5 GHz band, a use that is compatible with the present invention.

The National Frequency Allocation Table also specifies the following power levels that can be emitted per channel in the following frequency bands:
5150 to 5250 MHz, maximum power 200 mW, maximum spectral power density 10 mW/MHz.
5250 to 5350 MHz, maximum power 200 mW with power control and maximum density 10 mW/MHz, and 100 mW if power control is not applied.
5470 to 5725 MHz, maximum power 1000 mW with power control, 500 mW if power control is not used.

At the time of drafting this specification, the main radio standard using the mentioned bands is IEEE 802.11, also known as WiFi (Wireless Fidelity), in variants IEEE 802.11a and IEEE 802.11 n, although for information sending capacity only variant 11 n is sold today, variant 11a being obsolete. For sending audio and video signals, the WiFi 11 n standard has the following drawbacks with respect to the present invention.

Firstly, the IEEE 802.11 n standard uses a minimum bandwidth of 20 MHz for sending any type of signal, whereas the DVB-T standard occupies a maximum of 8 MHz per radio channel.

The DVB-T signal data transmission capacity depends on the features of the radio channel. In settings with high propagation losses and echoes with high propagation delay, characteristic of outdoor radio broadcasting, it is necessary to use simple modulations such as QPSK and high guard times, such that for 8 MHz occupied bandwidths, the rate that could be reached will be of the order of 5 Mbit/sec, whereas in favorable settings a rate of 31 Mbit/sec can be reached.

In an indoor setting such as the object of the present invention, echoes with a high propagation delay do not occur, such that the minimum guard times specified by the system can be used, which allows a higher transmission rate.

Concerning propagation losses, they will depend on the distance between the transmitter and the receiver inside the home. The parameter that will determine the modulation that could be used is the signal to noise ratio at reception, depending on the transmission power and losses. By way of example and without discarding the use of 6 and 7 MHz bandwidths for the DVB-T signal, in a typical home the propagation losses allow using at least a 16 QAM type modulation, rates of up to 21 Mbit/s therefore being used according to that described in Annex A, Table A.1 of ETSI EN 300 744. In these typical conditions, the DVB-T standard could support two high-definition audio and video channels with MPEG-2 coding and 10 Mbit/sec stream per channel.

In these conditions, if the modified DVB-T interface object of this invention is used the emitted spectral power density will be in the following ranges in the event that it is necessary to send two high-definition video channels in an 8 MHz bandwidth:

A maximum of 80 mW (due to the limitation of a 10 mW/MHz maximum) could be emitted in the band between 5150 and 5350, the spectral power density evidently being 10 mW/MHz.

In the band between 5470 to 5725 MHz, with emitted powers between 1000 mW and 500 mW, the emitted spectral power density will be between 125 and 62.5 mW/MHz.

These values are the same for the case in which it is necessary to send two or four high-definition channels. In the first case, a single DVB-T carrier will be emitted with an 8 MHz bandwidth, and in the second case two DVB-T carriers will be emitted such that even though the occupied bandwidth is doubled, the emitted power is also doubled.

For the comparison with the IEEE 802.11 n standard, the situation that is most favorable to IEEE 802.11 n is used in which a single 20 MHz bandwidth channel can support four HDTV (High-definition TV) channels, with an aggregate transmission rate of 40 Mbit/sec. In these conditions, the emitted spectral power density will be in the following range:

A maximum of 200 mW (due to the limitation of a maximum of 10 mW/MHz) could be emitted in the band between 5150 and 5350, the spectral power density being 10 mW/MHz.

In the 5470 to 5725 MHz band, with emitted powers between 1000 mW and 500 mW, the emitted spectral power density will be between 50 and 25 mW/MHz.

Based on this emitted spectral power density analysis, it is concluded that the use of the DVB-T interface modified to work in the band between 5470 and 5725 MHz is favorable because the spectral power density emitted by the modified DVB-T would be 150% greater than that emitted by IEEE 802.11 n.

The preceding analysis can also be extended for the case of using 6 and 7 MHz bandwidths, contemplated in ETSI EN 300 744, which can allow spectral densities greater than in the case of using an 8 MHz bandwidth at the cost of a certain reduction in the data transmission capacity.

The higher spectral power density of the DVB-T signal means that if modified DVB-T and WiFi 11n signals co-existed under the same conditions (DVB-T transmitter and WiFi 11 n transmitter in the same place), the DVB-T signal in the 5470 to 5725 MHz band would be at least 4 dB above the WiFi 11n in the receiver, resulting in a better signal to noise ratio at reception as a result of this higher spectral power density.

Secondly, the IEEE 802.11n standard has radio spectrum analysis capabilities, such that it automatically selects a different radio channel in the case of detecting high interference. The IEEE 802.11 n standard will thus use a radio channel other than the one used by the DVB-T interface in the 5470 to 5725 MHz band, because the DVB-T interface will generally always have a power greater than the IEEE 802.11n, such that the latter will be forced to select another channel to prevent interference, as established in the IEEE 802.11 n standard.

To enable the IEEE 802.11 n standard to select an area of the spectrum other than the one occupied by the modified DVB-T signal according to the present invention, the modified DVB-T signal occupies an area of the spectrum such that it makes its data sub-carriers coincide with the pilot sub-carriers of the IEEE 802.11 n signal, as described below.

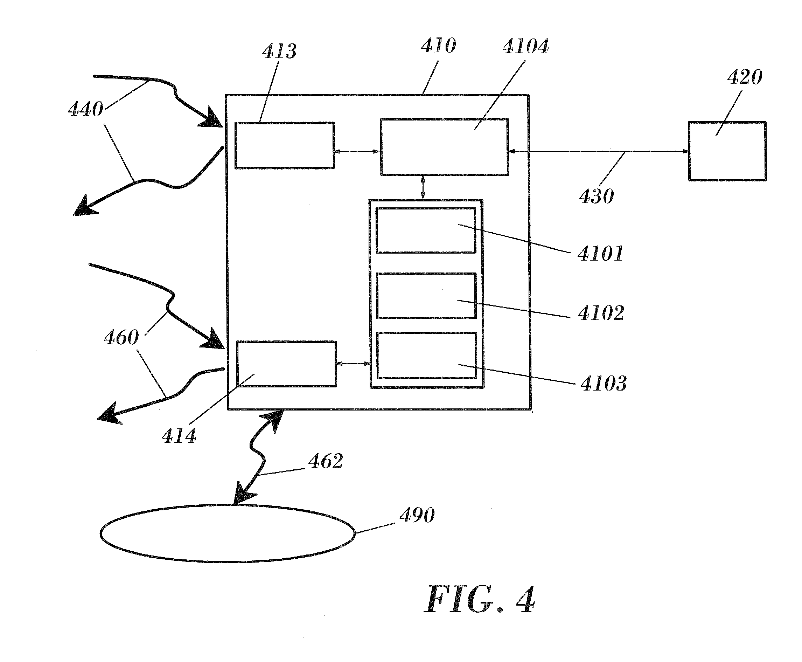

The IEEE 802.11 n signal consists of an OFDM (Orthogonal Frequency Division Multiplexing) type multiplex consisting of 48 data sub-carriers, 4 pilot sub-carriers, 6 unoccupied sub-carriers in the lower frequency area, 6 unoccupied sub-carriers in the upper frequency area, and an unoccupied central sub-carrier to facilitate the homodyne detection of the signal. The central sub-carrier is numbered as 0 (Figures 4 to 6), the sub-carriers being numbered from -32 (lower frequency) to 32 (higher frequency). According to this diagram, the pilot sub-carriers are numbered as -21, -7, 7 and 21, and the unoccupied sub-carriers are -32 to -27, 0, and 27 to 32, all the sub-carriers being separated by a frequency of 312.5 KHz.

In the case of the DVB-T signal, there are 6 possible OFDM sub-carrier configurations, depending on if an of 8, 7 or 6 MHz bandwidth is used, and on if the 8K mode (6816 sub-carriers) or 2K mode (1704 sub-carriers) is used. By way of example, and without excluding the use of any of the other combinations, the case of an 8K type DVB-T signal with an 8 MHz bandwidth is described.

In this case, the 8K type DVB-T signal with an 8 MHz bandwidth has 6816 OFDM sub-carriers, each of them separated by a frequency of (1/896 µ sec) Hz. In this multiplex the sub-carriers are numbered from 0 (lowest frequency, Figures 4 to 6) to 6816 (highest frequency). In all the OFDM symbols making up a DVB-T frame sub-carriers 0 and 6816 are always pilot type sub-carriers, whereas sub-carriers Kp, with Kp = 0 + 3.n where 0 < n < 2272, are pilot type sub-carriers in one of every four symbols of the DVB-T frame.

For the DVB-T signal to force the IEEE 802.11 signal to occupy another area of the radio spectrum, which is one of the novelties of the present invention, the frequency of the DVB-T OFDM multiplex is selected such that DVB-T data sub-carriers are situated in exactly the same frequency as two of the IEEE 802.11 n pilot sub-carriers, this being possible as a result of the fact that the IEEE 802.11 n pilot sub-carriers are separated by a whole number of 8K type DVB-T sub-carriers with 8 MHz bandwidth, specifically separated 3920 ×(1/896 µ sec) Hz. The fact that the IEEE 802.11 n pilot sub-carriers are separated according to a whole number of DVB-T sub-carriers has not intentionally been developed by either of the two standards (IEEE 802.11 and DVB-T) and is fundamental for efficiently superimposing DVB-T data sub-carriers on IEEE 802.11n pilot sub-carriers.

Although the preceding example has been developed for the 8K mode in an 8 MHz bandwidth, this can be extended to other cases. For example, in the case of using the 2K mode with an 8 MHz bandwidth, the separation between IEEE 802.11 n pilot sub-carriers is exactly that existing between 980 type 2K DVB-T sub-carriers in an 8 MHz bandwidth.

This exact ratio between the separation of IEEE 802.11 n pilot sub-carriers and DVB-T sub-carriers also occurs in the case that the DVB-T signal uses a 7 MHz bandwidth. When the bandwidth is 7 MHz and the 8K mode is used, the separation between IEEE 802.11n pilot sub-carriers is exactly that existing between 4480 8K type DVB-T sub-carriers in a 7 MHz bandwidth. When the bandwidth is 7 MHz and the 2K mode is used, the separation between IEEE 802.11n pilot sub-carriers is exactly that existing between 1120 8K type DVB-T sub-carriers in a 7 MHz bandwidth.

The purpose of this superimposition of DVB-T data sub-carriers with IEEE 802.11 n pilot sub-carriers is to make it difficult to receive the pilot sub-carriers in the IEEE 802.11n receiver, and given that the pilot sub-carriers are the most important for correctly decoding the signal, to thus force the 802.11 n interface to select a different area of the spectrum.

It is possible to select the specific frequency position of the DVB-T OFDM multiplex in different ways, and one of them is described in Figure 4 by way of example for the case of using the 8K mode in an 8 MHz bandwidth. The frequency of the first DVB-T sub-carrier, carrier numbered as 0 in DVB-T and being a pilot type carrier, at a separation frequency FS (Figure 4) of 398,437.5 Hz above the carrier numbered as -32 in IEEE 802.11 n, is selected. In these conditions, the DVB-T data sub-carrier numbered as 2723 coincides in frequency with the IEEE 802.11 n pilot sub-carrier numbered as -21, both located 3,437,500 Hz above said IEEE 802.11 n sub-carrier -32, and the DVB-T data sub-carrier numbered as 6643 coincides in frequency with the IEEE 802.11 n pilot sub-carrier numbered as -7, both located 7,812,500 Hz above said IEEE 802.11 n sub-carrier -32. As can be seen, in these conditions a DVB-T data sub-carrier will always coincides with an IEEE 802.11 n pilot sub-carrier, making it difficult to receive the latter.

The present invention also takes into account the limitations imposed by the frequency tolerance of the IEEE 802.11 n signals and the frequency tolerance of the transmitted modified DVB-T signal. The most unfavorable case is where the IEEE 802.11 n signal is transmitted in the high area of the spectrum, around 5725 MHz, and the frequency tolerance of the IEEE 802.11 n signal is so poor that the IEEE 802.11 n pilot sub-carriers are transmitted in the frequency where the data sub-carriers should be emitted. Since the separation between sub-carriers in IEEE 802.11 n is 312.5 KHz, the DVB-T transmitter must be capable of adjusting its transmission frequency with a precision of 0.1 x (312.5 10³ / 5725 10⁶) so that the DVB-T data sub-carriers are separated from the IEEE 802.11 n pilot sub-carriers by a maximum 31.25 KHz, where most of the energy of the IEEE 802.11 n pilot sub-carrier is concentrated. The value of the precision of 0.1 x (312.5 10³ / 5725 10⁶) is 5.4 ppm (parts per million), which is within the possibilities of low-cost commercial crystals.

On the other hand, the situation of the possible coincidence of IEEE 802.11 data sub-carriers with pilot sub-carriers of the DVB-T signal, which will make it difficult to receive the latter signal, is favorable to the DVB-T signal.

According to the frequency selection example described in the preceding paragraph, the DVB-T sub-carrier numbered as 0, which is always a pilot type sub-carrier, is at a frequency of 398,437.5 Hz above the carrier numbered as -32 in IEEE 802.11 n, the frequency located between 802.11 n sub-carriers -31 and -30, which sub-carriers furthermore are never used to allow the availability of a frequency guard band between IEEE 802.11 n signals, and the DVB-T pilot sub-carrier 0 will be always free of interference from 802.11 n.

Continuing with the analysis, the other sub-carrier permanently dedicated to pilot in DVB-T, 6816, is at a frequency of 8,005,580.36 Hz above the carrier numbered as -32 in IEEE 802.11 n, the frequency located between the -7 (7,812,500 Hz above -32) and -6 (8,125,000 Hz above -32) 802.11 n sub-carriers, and the DVB-T pilot sub-carrier 6816 will always be free of interference from 802.11 n as it does not coincide with its sub-carriers -7 and -6.

Finally, the possible interference on the pilots that are sent in sub-carriers Kp of the DVB-T signal in this example of adjusting the frequency of the modified DVB-T signal must be analyzed. In this case, the IEEE 802.11 data sub-carriers numbered as -26, -23, -20, -17, -14, ―11 and -8 coincide with the DVB-T sub-carriers numbered as 1323, 2163, 3003, 3843, 4683, 5523 and 6363, although since in DVB-T only one of every four symbols in these sub-carriers is a pilot type sub-carrier, interference occurs only 25% of the time. On the other hand, an 8K type DVB-T signal with an 8 MHz bandwidth dedicates 2271 of its sub-carriers so that they are used as pilot sub-carriers in one of every four OFDM symbols (besides sub-carriers 0 and 6816, which are always pilot sub-carriers), such that the data sub-carriers of the IEEE 802.11 n signal will only coincide with a DVB-T pilot type sub-carrier 0.077% (100 × 0.25 × 7/2271) of the time.

The novelty of the present invention is based on the fact that as a result of these two differential features of the modified DVB-T standard for the 5470 to 5725 MHz band with respect to the IEEE 802.11 n standard, firstly there is better signal to noise ratio at reception as a result of a higher spectral power density, and secondly interference on the DVB-T interface is reduced because the IEEE 802.11 n standard is forced to select a different radio frequency channel, using the modified DVB-T standard to work in the 5470 to 5725 MHz band allows sending audio and video signals in indoor settings reliably, measured as interference resistance, greater than that of the already existing methods, and specifically greater than IEEE 802.11 n.

In the event that the broadband radio interface needs a higher information transmission capacity, it could use as many 8K or 2K type DVB-T signals with 8, 7 and 6 MHz bandwidths as needed. These DVB-T signals could use any frequency between 5470 and 5725 MHz, using the same frequency selection principles (coincidence of DVB-T data sub-carriers with IEEE 802.11 n pilot sub-carriers) described above.

The method of the invention has the novelty of incorporating the following steps:
- receiving multiple audio and video signals in the radio access node according to any of the Digital Video Broadcasting, DVB, standard variants, selected from Digital Video Broadcasting-Terrestrial, DVB-T, Digital Video Broadcasting-Satellite, DVB-S, Digital Video Broadcasting-Internet Protocol, DVB-IP, Digital Video Broadcasting-Cable, DVB-C, and Digital Video Broadcasting-Handheld, DVB-H,
- receiving multiple audio and video signals in the radio access node according to any of the Moving Picture Expert Group, MPEG, format variants
- processing said received audio and video signals in the radio access node and generating a new modified DVB-T type signal in the band comprised between 5470-5725 MHz, so that the spectral power density of the modified DVB-T type signal is at least 4 dB greater than the IEEE 802.11 n signal which uses the same 5470-5725 MHz frequency band
- applying the scanning functionality of the IEEE 802.11 n radio spectrum which selects a radio channel other than the one used by the DVB-T broadband radio interface in 5470-5725 MHz due to the higher spectral power density of the latter, so that the interference level of the broadband radio interface in the same radio channel is reduced.

As described above, the system 100 implements a specific radio interface called radio control interface 160 which supports a control channel used for managing the entire system 100, and in the present invention preferably to support a return channel which allows selecting using the client device the audio and video signals that will be sent by the broadband radio interface from the radio access node. The radio control interface 160 is designed such that it maximizes the coverage and resistance to propagation problems and errors. This is achieved by means of a low net data transmission rate, using coding techniques to increase signal redundancy and therewith resistance to errors. It further implements spectrum management techniques, using at all times the radio channel with the lowest radio electric occupation and the least interfered. It also implements signal retransmission techniques, including HARQ (Hybrid Automatic Repeat-Request) type, for the case in which errors at reception are unrecoverable despite using coding techniques. It further implements information interlinking techniques in time for being able to support retrieving information in the case of signal bursts with errors.

Concerning the remaining functionalities, the radio control interface and the control channel supported by it are implemented as described in patent application P200802049.

The present invention further introduces a novelty in the implementation of the radio control interface with respect to that described in patent application P200802049 concerning the use frequency that is used. Although the use of other frequency bands is not excluded, the present invention includes the possibility of using the band ranging from 5470 to 5725 MHz, also used by the broadband radio interface.

According to a possible embodiment of this invention, which is shown in Figure 4, the radio control interface is emitted in any of the frequencies corresponding to the IEEE 802.11 n sub-carriers 0, specifically in the frequencies according to the ratio
Frequency = 5000 + (5 × nch) (MHz)
where nch is the IEEE 802.11 n radio channel number, and it is between 96 and 140 in the 5470 to 5725 MHz band, with jumps of 4 (for example, 96, 100, 104, 108, etc.).

The reason for selecting the frequency of the sub-carriers 0 for emitting the radio control interface 160 is two-fold. Firstly, the sub-carrier 0 of an 802.11n OFDM multiplex is always unused, such that the radio control interface will not sustain interference from IEEE 802.11 n. Secondly, since the radio control interface occupies the frequency of the IEEE 802.11 sub-carrier 0, which the IEEE 802.11 n standard leaves unused to facilitate the homodyne demodulation of the IEEE 802.11 n signal in the receivers, the correct reception of the IEEE 802.11 n signal therefore becomes difficult and IEEE 802.11 n selecting a radio channel other than the one used by the DVB-T interface in the 5470 to 5725 MHz band is therefore facilitated. To facilitate IEEE 802.11 n using a radio channel other than the one used by the broadband radio interface, the broadband radio interface and the radio control interface both in the 5470 to 5725 MHz band work in a coordinated manner as follows.

According to Figure 4, when the broadband radio interface 140, consisting of a DVB-T signal in the 5470 to 5725 MHz band, overlaps with an IEEE 802.11 n channel (IEEE 802.11 n channels nch between 96 and 140), the radio control interface is located at the frequency of the sub-carrier 0 of the same channel. The effects of the DVB-T data sub-carriers which overlap with the pilots of the IEEE 802.11 n sub-carriers -21 and -7 are thus reinforced with the effects of the radio control interface which overlaps with the IEEE 802.11n sub-carrier 0, thereby facilitating the IEEE 802.11 n radio interface selecting a different radio channel.

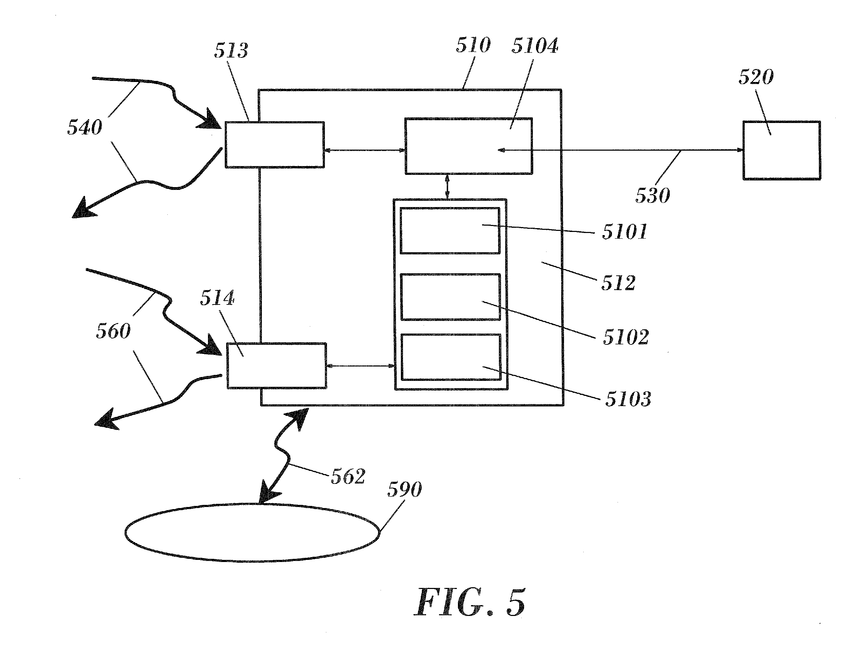

According to another possible embodiment of this invention, which is shown in Figure 5, the radio control interface 160 is emitted in any of the frequencies corresponding to sub-carriers 21, an IEEE 802.11n pilot type sub-carrier, specifically in the frequencies according to the ratio
Frequency = 5000 + (5 × nch) + (21 × 0.3125) (MHz)
where nch is the IEEE 802.11 n radio channel number, and it is between 96 and 140 in the 5470 to 5725 MHz band, with jumps of 4 (for example, 96, 100, 104, 108, etc).

The reason for selecting the frequency of the sub-carriers 21 for emitting the radio control interface is two-fold. Firstly, the sub-carrier 21 of an 802.11 n OFDM multiplex is always used as a pilot, such that the radio control interface will always overlap on it and will make it difficult to receive the IEEE 802.11 n signal, thereby facilitating IEEE 802.11 n to select a different radio channel. Secondly, the frequency separation between the radio control interface and the highest DVB-T sub-carrier, 6816 in Figure 5, can be adjusted so that it is greater than 7,607,142.9 Hz, such that there are no intermodulation products between DVB-T sub-carriers and the radio control interface superimposed on the DVB-T signal, facilitating the physical implementation of the broadband radio interface and the radio control interface as less linear apparatuses are needed. Again, to facilitate the IEEE 802.11 n using a radio channel other than the one used by the broadband radio interface, the broadband radio interface and the radio control interface, both in the 5470 to 5725 MHz band, work in a coordinated manner as follows.

According to Figure 5, when the broadband radio interface consisting of a DVB-T signal in the 5470 to 5725 MHz band overlaps with an IEEE 802.11 n channel (IEEE 802.11n channels nch between 96 and 140), the radio control interface is located at the frequency of the sub-carrier 21 of the same channel. The effects of the DVB-T data sub-carriers which overlap with the pilots of the IEEE 802.11 n sub-carriers -21 and -7 are thus reinforced with the effects of the radio control interface which overlaps with the IEEE 802.11 n pilot type sub-carrier 21, thereby facilitating the IEEE 802.11 n radio interface selecting a different radio channel.

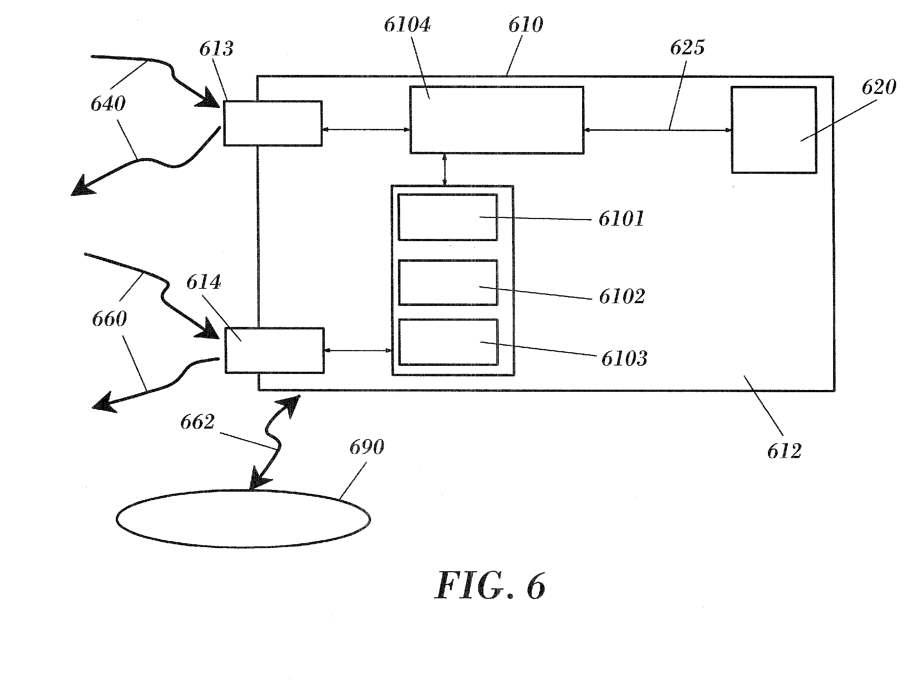

According to another possible embodiment of this invention, which is shown in Figure 6, the radio control interface is emitted in any of the frequencies corresponding to sub-carriers 27 to 32, specifically in the frequencies according to the ratio Frequency = 5000 + (5 × nch) + ((27 to 32) × 0.3125) (MHz).
where nch is the IEEE 802.11 n radio channel number, and it is between 96 and 140 in the 5470 to 5725 MHz band, with jumps of 4 (for example, 96, 100, 104, 108, etc).

The reason for selecting the frequency of sub-carriers 27 to 32 for emitting the radio control interface is two-fold. Firstly, sub-carriers 27 to 32 of an 802.11 n OFDM multiplex are always unused, such that the radio control interface will not receive IEEE 802.11 n interference. Secondly, the frequency separation between the radio control interface and the highest DVB-T sub-carrier, 6816 in Figure 6, can be adjusted so that it is greater than 7,607,142.9 Hz, such that there are no intermodulation products between DVB-T sub-carriers and the radio control interface superimposed on the DVB-T signal, facilitating the physical implementation of the broadband radio interface and the radio control interface as less linear apparatuses are needed.

Furthermore, all the devices of the system 100 implement cognitive radio, such that the state of the radio spectrum is analyzed and the most appropriate frequency band for the broadband radio interface and the radio control interface is selected at all times.

Illustratively, though not restricted to other embodiments, the cognitive radio function can consist of a radio spectrum spectral analysis (known as Spectrum Sensing Cognitive Radio) and the measurement of the radio power detected in each unlicensed frequency band of the spectrum, which allows selecting the least congested bands of the spectrum for use. In a possible embodiment, without excluding other alternative embodiments, the implementation is based on one or several low noise amplifiers detecting the radio signals, which are converted to intermediate frequency by means of mixers and a tunable local oscillator, such that by tuning the frequency of the local oscillator it is possible to select different sections of the radio frequency spectrum detected by the low noise amplifiers.

The intermediate frequency signals are then filtered by means of channel bandpass filters. Once the intermediate frequency signals are filtered, their power is detected by means of conventional techniques.

Another possible embodiment of the specific cognitive radio of the present invention and making use of the fact that the IEEE 802.11 n pilot sub-carriers can be separated from one another by an exact number of DVB-T sub-carriers is the following.

All the elements making up the system 100 support the broadband radio interface, such that they all have broadband radio transmitting/receiving modules 103,183, 113. According to the present invention, these modules must be capable of transmitting and receiving an 8K or 2K mode DVB-T type signal with an 8, 7 and 6 MHz bandwidth, in the 5470 to 5725 MHz frequency band. As described above, the 8K or 2K mode DVB-T signal with an 8 or 7 MHz bandwidth has sub-carriers that can coincide exactly with the position of two IEEE 802.11 n pilot sub-carriers. According to the present invention, a possible embodiment of cognitive radio is based on using the broadband radio transmitting/receiving modules, which would be used when desired for tracking the presence of IEEE 802.11 n type signals in the 5470 to 5725 MHz band. To that end, the broadband radio transmitting/receiving modules 103,183, 113 are configured when desired so that they do not support the broadband radio interface, such that they are configured in 8K or 2K mode with an 8 or 7 MHz bandwidth and only as receivers. The exact frequency at which the broadband radio transmitting/receiving modules 103,183, 113 are tuned at reception is such that some of the DVB-T sub-carriers which these modules are prepared to detect coincide exactly with two of the pilot sub-carriers (sub-carriers -21, -7, 7 and 21) that could use an IEEE 802.11 n radio interface that could be occupying the same spectral area. If an IEEE 802.11 n signal occupies the same spectral area, the broadband radio transmitting/receiving module could decode two IEEE 802.11n pilots and determine that the radio channel is occupied by an IEEE 802.11n signal.

There are two advantages to this implementation of cognitive radio. Firstly, the detection of pilot sub-carriers is always more reliable than a simple detection of radio power in an area of the spectrum, because the pilot signals are known and are emitted in a deterministic manner for the purpose of facilitating detection. Secondly, to implement cognitive radio no additional apparatuses are needed in the devices making up the system 100, being able to make use to that end of the broadband radio transmitting/receiving modules which must be integrated in all the devices of the system 100.

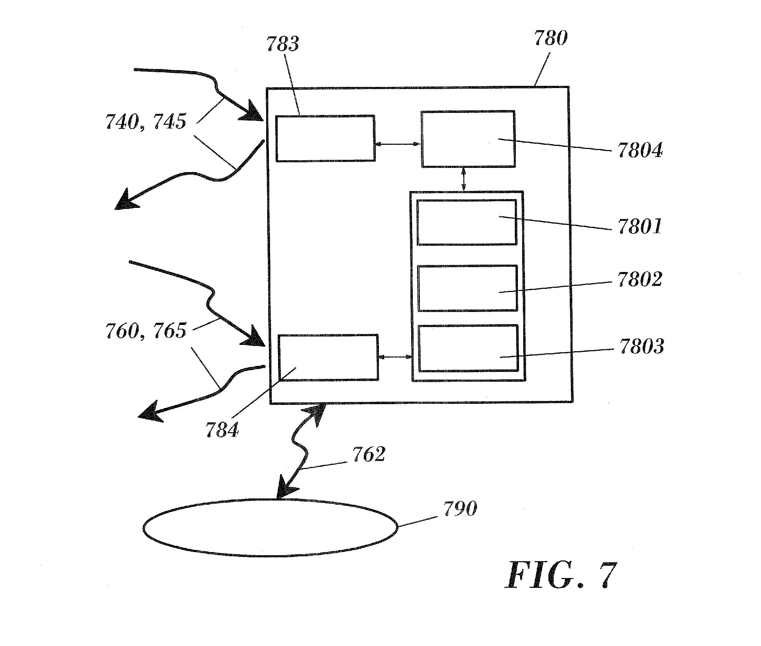

Figure 7 shows a general diagram of the invention, detailed for a modified DVB-T type broadband interface 140 for working in the 5470 to 5725 MHz band. This interface in the present invention is one-way, starting from the radio access node 101, being received if necessary by a radio router 180 (not depicted in Figure 7), and received in a client device 110. This broadband radio interface is used to transport audio and video signals received by the radio access node 101 through the access interface 150, which signals are received according to many formats, for example and without excluding other possible DVB-T, DVB-IP, DVB-S, DVB-H, DVB-C, MPEG on TS-ASI, TS-SSI, TS, TS-SPI, PS type formats.

As can be seen in Figure 7, the client device 110 incorporates an additional interface with respect to that described in patent application P200802049, the interface being called user control interface 102. This interface is used so that the user can select from the client device 110, which will be connected to the end device 120, which will generally be a television set, the audio and video signals to be delivered to the end device. This is necessary because the radio access node could receive multiple audio and video signals through the access interface, but it will only emit through the broadband radio interface 140 those contents selected by the user in order to use only the radio spectrum that is strictly necessary. Therefore, once the user selects the signals to be delivered to the end device, this selection is transmitted from the client device to the radio access node by means of the radio control interface 160.

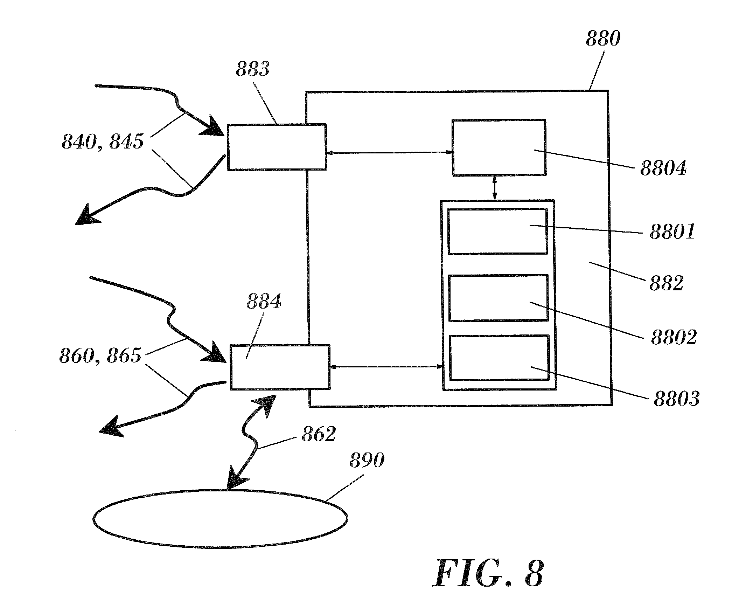

Concerning the particular embodiment of the radio access node 101, which is based on that described in Figure 2 and is shown in Figure 8, it can be seen how a set of audio and video signals are received by the access interface 150. These signals can be of several types and, without wishing to be limiting and without excluding other formats, the following examples can be described:

DVB-T, DVB-IP, DVB-S, DVB-H, DVB-C type signals. These signals must be decoded in a decoder 103a to extract the MPEG type signals they contain and to deliver them to a DVB-T encoder block 103b by means of one or several TS-ASI, TS-SSI, TS, TS-SPI, PS type interfaces 103e.

MPEG type baseband signals contained in TS-ASI, TS-SSI, TS, TS-SPI, PS streams.

From the MPEG over TS-ASI, TS-SSI, TS, TS-SPI, PS signals, whether they are from the demodulator block 103a or directly from the access interface 150, the DVB-T encoder block 103b of the radio access node 101 generates a DVB-T signal in the 5470 to 5725 MHz band.

There are two reasons for the apparently contradictory process of demodulating a DVB-T signal to subsequently modulate it again in DVB-T.

Firstly, a DVB-T signal can contain a very high number of audio and video contents and occupy a very high radio frequency spectrum which could not be supported by the DVB-T type broadband radio interface in the 5470 to 5725 MHz band. During the demodulation process only the audio and video contents that must be transmitted by the broadband radio interface according to the selection made by the user through the user control interface 102 and transmitted from the client device 110 to the radio access node 101 are extracted. It is therefore possible to transmit only a sub-set of the audio and video signals received by the access interface, which can be supported by the broadband radio interface.

Secondly, the emission of a DVB-T signal in the 5 GHz band cannot be done by means of simply converting the frequency of a standard DVB-T signal in the VHF/UHF band to the 5 GHz band by means of a local oscillator 103c and a mixer 703d. This is because the COFDM (Coded Orthogonal Frequency Division Multiplexing) modulation used in DVB-T requires frequencies of the sub-carriers forming them to always be a whole multiple of the inverse of the COFDM symbol period, and this condition will not be met when converting the frequency with a local oscillator 103c which is not synchronized with the clock used to generate the original DVB-T signal in VHF/UHF. The demodulation of the DVB-T signal allows obtaining the original baseband audio and video signals, and from there a new DVB-T signal can be generated in the 5 GHz band now using a local oscillator 103c which is used to generate the OFDM symbol frame and the sub-carriers in the 5470 to 5725 MHz band, and thus ensuring the ratio between the frequencies of the sub-carriers and the inverse of the COFDM symbol period.

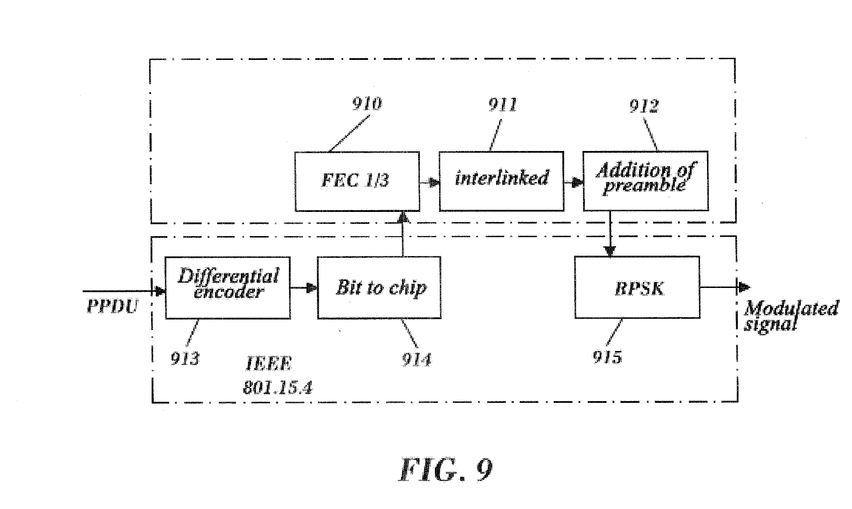

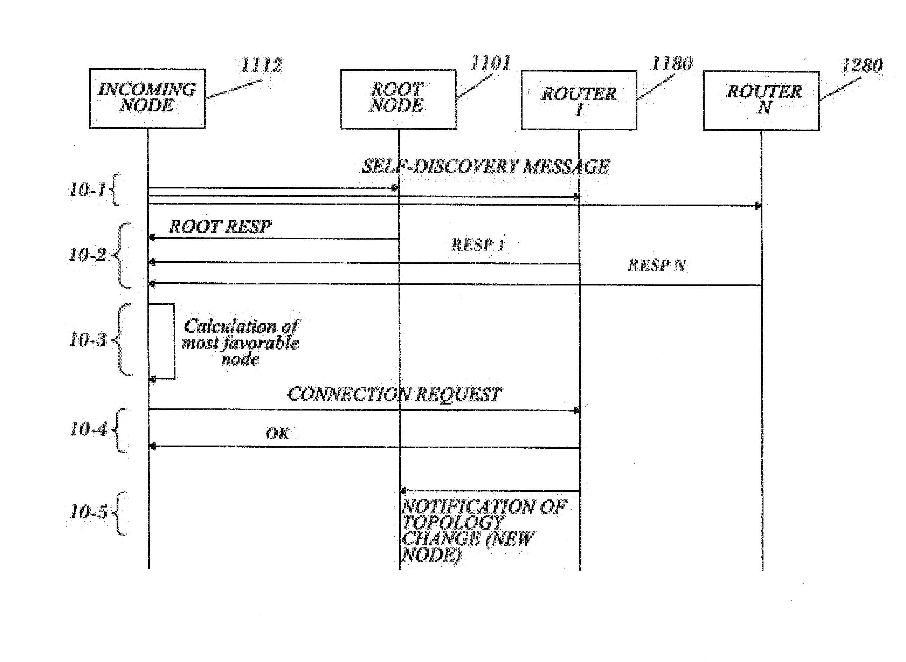

The particular embodiment of the client device 110 is shown in Figure 9 where the broadband radio interface 140 becomes a tuning block 113a which is responsible for delivering a COFDM baseband or intermediate frequency signal to a DVB-T demodulator 113b. The DVB-T demodulator 113b demodulates the signal it receives and delivers at its output one or several audio and video signals in MPEG format, supported by means of TS-ASI, TS-SSI, TS, TS-SPI, PS type frames. These latter frames can be delivered directly to the end device 120 through the end device interface 130, or they can previously be converted into another format before being delivered to the end device 120. This format can be, by way of example and without limiting the possibility of using another type, HDMI, DVB-T in VHF/UHF bands, analog baseband audio and video, Euroconnector signal, etc.

Figure 9 shows how the client device 110 has a user control interface 160 which allows a user to communicate with the client device 110. The purpose of this communication is to select the audio and video signals that will be delivered by the client device 110 to the end device 120, such that the selection made by the user is transferred from the client device 110 to the radio access node 101 by means of the radio control interface 160.

More specifically, the process which allows selecting audio and video signals from the client device is the following:

In a first step, the radio access node performs a scanning of all the audio and video signals it receives through the access interface. By way of example, and without excluding other possible embodiments, the radio access node tunes all the radio channels of a DVB-T, or DVB-S, signal or takes a TS-ASI and extracts the existing TS (Transport Stream MPEG). For each of these TS it obtains the PSI (Program Specific Information) that can demultiplex each of the programs that are transported by the TS, program being understood as a fixed association of MPEG video and audio signals.

Once this scan is performed, the radio access node 101 records all the programs it has detected and sends the complete list thereof to the client device 110 through the radio control interface 160, where this information is also recorded.

The user then connects to the client device 110 by means of the user control interface 160 and requests information about the available programs. This information could be presented to the user through the user control interface and be displayed in the apparatus connected to this user control interface 102, or be presented to the user through the end device interface to de displayed in the end device, which by way of example can be a television set.

Once the information about the available programs is presented, the user could select them one by one, acting through the user control interface 102, for audiovisual identification and eventual association with a keyword. By way of example, by selecting a specific program the user could check that it corresponds with a specific commercial television broadcaster and assign it a name or number, or it could check that it is a signal from a local audio and video player connected to the radio access node and again assign it a name or number.

Once this association is made, the user could at any time select the audio or video content, or program, he/she wishes to display in the end device, selecting from a list of keywords that will be presented to him/her in the end device 120 or in the apparatus that is connected to the user control interface 102.

Once the user selects the keyword of the list that is presented, the information about the selection is transmitted from the client device to the radio access node, passing if necessary through a routing device by means of the radio control interface.

When the radio access node receives this information about the program selected by the user, the program is then included among the programs that are multiplexed and encoded in the DVB-T encoder block 103b depicted in Figure 7 to be subsequently transmitted by the DVB-T type broadband radio interface 140 in the 5470 to 5725 MHz band. The information about the position of the selected program in the multiplex that is sent in the DVB-T signal in the 5470 to 5725 MHz band is communicated to the client device 110 through the radio control interface 160, by way of example by means of PSI type fields.

The broadband radio interface 140, consisting of the DVB-T signal in the 5470 to 5725 MHz band, is received by the client device 110, passing if necessary through a routing device, and is tuned by the tuning block 113a which is shown in Figure 9. The tuning block delivers a baseband or intermediate frequency COFDM signal to the DVB-T decoder 113b which is shown in Figure 9. This DVB-T decoder block extracts, using to that end the PSI type information sent from the radio access node 101 to the client device by means of the radio control interface 160, the specific program that the user has requested and is delivered through the end device interface 130 to the end device 120.

## Claims

1. Method for distributing wireless audio and video signals indoors which receives broadband signals in a radio access node (101) in a mode selected from local mode and through a telecommunications access network (170) to which it is connected by means of an access interface (150), wherein said radio access node (101) comprises a broadband signal transmitting/receiving module (103) configured to transmit and receive broadband wireless signals through a broadband radio interface (140) to and from at least one client device (110) comprising a broadband signal transmitting/receiving module (113) configured to transmit and receive broadband wireless signals to/from said radio access node (101) through said broadband radio interface (140); **characterized in that** it comprises:
- receiving multiple audio and video signals in the radio access node (101) according to any of the Digital Video Broadcasting, DVB, standard variants, selected from Digital Video Broadcasting-Terrestrial, DVB-T, Digital Video Broadcasting-Satellite, DVB-S, Digital Video Broadcasting-Internet Protocol, DVB-IP, Digital Video Broadcasting-Cable, DVB-C, and Digital Video Broadcasting-Handheld, DVB-H;
- receiving multiple audio and video signals in the radio access node (101) according to any of the Moving Picture Expert Group, MPEG, format variants;
- processing said received audio and video signals in the radio access node (101) and generating a new modified DVB-T type signal in the band comprised between 5470-5725 MHz, so that the spectral power density of the modified DVB-T type signal is at least 4 dB greater than the IEEE 802.11 n signal which uses the same 5470-5725 MHz frequency band;
- applying the scanning functionality of the IEEE 802.11 n radio spectrum which selects a radio channel other than the one used by the DVB-T broadband radio interface in 5470-5725 MHz due to the higher spectral power density of the latter so that the interference level of the broadband radio interface (140) in the same radio channel is reduced.

2. Method for distributing wireless audio and video signals indoors according to claim 1, **characterized in that** the generation of the new modified DVB-T type signal in the radio access node (101) in the frequency band between 5470 and 5725 MHz is done such that some of the data sub-carriers of the modified DVB-T signal always overlap with the pilot sub-carriers of the IEEE 802.11n signal in order to make it difficult for radio receivers using the IEEE 802.11n standard to receive pilot sub-carriers and to thus facilitate said IEEE 802.11 n radio receivers selecting a radio channel other than the one used by the DVB-T type broadband radio interface in the frequency band between 5470 and 5725 MHz, as established in said IEEE 802.11 n standard.

3. Method for distributing wireless audio and video signals indoors according to claim 2, **characterized in that** the overlap of the data sub-carriers of the IEEE 802.11n signal with the pilot sub-carriers of the modified DVB-T signal occurs in less than 0.077% of all cases so that the IEEE 802.11 n signals interfere with the broadband radio interface to a lesser extent.

4. Method for distributing wireless audio and video signals indoors according to claims 1 or 2, comprising sending control signals over a control channel configured to exchange control signals between said radio access node (101) and said, at least one, client device (110) over a radio control interface (160), so the radio access node (101) and the, at least one, client device (110) comprise a control signal transmitting/receiving module (104,114) configured to establish said control channel to transmit and receive wireless signals over said radio control interface (160); **characterized in that** it comprises:
- scanning the multiple audio and video signals received in the radio access node (101) through the access interface (150),
- recording the different multiple audio and video signal programs in the radio access node (101), program being understood as a fixed association of audio and video signals;
- sending a list of the different recorded programs to the, at least one, client device (110) over the radio control interface channel (160) and recording said list in the, at least one, client device (110),
- selecting one of the recorded programs through a user control interface (102) connected to the, at least one, client device (110),
- sending the selection made to the radio access node (101) through the radio control interface (160),
- sending the content of the recorded program together with other programs from the radio access node (101) to the, at least one, client device (110) through the broadband interface (140), and sending the position of the selected program to the, at least one, client device (110) through the radio control interface (160),
- receiving the recorded program together with other programs in the, at least one, client device (110), and receiving the position of the selected program in the, at least one, client device (110) to extract the selected program from the position of the received selected program,
- reproducing the selected audio and video signal in an end device (120), connected to the, at least one, client device (110) through an end device interface (130).

5. Method for distributing wireless audio and video signals indoors according to claim 4, **characterized in that** the radio control interface (160) also uses the 5470-5725 MHz band, such that the broadband radio interface (140) occupies the same radio channel as the radio control interface (160), so the radio control interface (160) and the broadband radio interface (140) use a coordinated frequency in which the radio control interface (160), is selected from the following frequencies:
- the frequency of the radio control interface (160) is matched with the sub-carrier 0 of the IEEE 802.11n standard, where the IEEE 802.11n standard does not conventionally emit a radio signal to facilitate the homodyne detection in the IEEE 802.11 n receivers and to thus prevent interference over the radio control interface (160) and to facilitate changing IEEE 802.11 n radio channel,
- the frequency of the radio control interface (160) is matched with pilot sub-carrier 21 of the IEEE 802.11 n standard in order to make it difficult to detect pilot sub-carrier 21 and to facilitate changing IEEE 802.11 n channel,
- the frequency of the radio control interface (160) is matched with sub-carriers 27 to 32 of the IEEE 802.11 n standard, which are conventionally not used, to prevent interference over the radio control interface (160).

6. Method for distributing wireless audio and video signals indoors according to the preceding claims, **characterized in that** sending broadband signals and control signals between the radio access node (101) and the, at least one, client device (110) is done through at least one routing device (180) which is configured to receive radio frequency signals through a broadband radio interface (140) and a radio control interface (160), both in the 5470-5725 MHz band, to regenerate said broadband and radio control signals and to retransmit them between the radio access node (101) and the, at least one, client device (110) and vice versa.

7. Method for distributing wireless audio and video signals indoors according to the preceding claims, **characterized in that** a device selected from the radio access node (101), the client device (110), the router (180) and combination thereof performs cognitive radio functions analyzing the spectrum occupancy in the 5470 to 5725 MHz band and selects the least interfered-with area of the spectrum in 8 MHz-wide blocks, such that the radio receiver supporting the broadband radio interface (140) tunes in to the frequency, exactly matching at least two of its receiving sub-carriers with two pilot sub-carriers of the IEEE 802.11n standard to detect the presence of said pilot sub-carriers and to determine that a specific radio channel is occupied by an IEEE 802.11 n signal.

8. Method for distributing wireless audio and video signals indoors according to claims 1 or 3, **characterized in that** it comprises receiving DVB signals in the radio access node (101) by means of a decoder (103a) after which DVB-T encoding is performed to obtain the modified DVB-T signal in the 5470-5725 MHz band, whereas the MPEG baseband signals which are received in the radio access node (101) are applied directly to a DVB encoder (103b) to obtain the modified DVB-T signal in the 5470-5725 MHz band.

9. Method for distributing wireless audio and video signals indoors according to claims 1 or 3, **characterized in that** it comprises receiving modified DVB-T broadband signals in the, at least one, client device (110) by means of a tuner (110a), after which DVB-T decoding (110b) is performed to send them to the end device (120) through the end device interface (130).
